# EUROPEAN PATENT SPECIFICATION

(11) **EP 2 935 431 B1**
(45) Date of publication and mention of the grant of the patent: **01.02.2017**
(21) Application number: 13810959.0
(22) Date of filing: 19.12.2013
(51) Int. Cl.: C08K 3/22

(54) **THERMOPLASTIC COMPOSITION**
THERMOPLASTISCHE ZUSAMMENSETZUNG
COMPOSITION THERMOPLASTIQUE

(30) Priority: 19.12.2012 EP 12198215
(43) Date of publication of application: 28.10.2015
(73) Proprietor: DSM IP Assets B.V., 6411 TE Heerlen (NL)
(72) Inventor: BURGT, VAN DER, Frank Peter Theodorus Johannes, NL-6100 AA Echt (NL)
(74) Representative: Derix, Nocky Marienna
(86) International application number: PCT/EP2013/077316
(87) International publication number: WO 2014/096153

(56) References cited:
- WO-A1-2009/141799

## Description

The invention relates to a glass fibre reinforced thermoplastic composition, comprising a thermoplastic base resin, glass fibers and a laser direct structuring additive and in particular to compositions capable of being used in a laser direct structuring process. Electrical components may be provided as molded injection devices (MID) with desired printed conductors, i.e., when manufactured in MID technology, using different methods, e.g., a masking method, in two-component injection molding with subsequent electroplating, through laser direct structuring, through coating the back of a film, or through hot stamping. In contrast to conventional circuit boards made of fiberglass-reinforced plastic or the like, MID components manufactured in this way are three-dimensional molded parts having an integrated printed conductor layout and possibly further electronic or electromechanical components. The use of MID components of this type, even if the components have only printed conductors and are used to replace conventional wiring inside an electrical or electronic device, saves space, allowing the relevant device to be made smaller, and lowers the manufacturing costs by reducing the number of assembly and contacting steps.

It is becoming increasingly popular to form MIDs using a laser direct structuring (LDS) process. In an LDS process a computer-controlled laser beam travels over the MID to activate the plastic surface at locations where the conductive path is to be situated. With a laser direct structuring process, it is possible to obtain small conductive path widths (such as of 150 microns or less). In addition, the spacing between the conductive paths may also be small. As a result, MIDs formed from this process save space and weight in the end-use applications. Another advantage of laser direct structuring is its flexibility. If the design of the circuit is changed, it is simply a matter of reprogramming the computer that controls the laser.

The current additives for LDS materials are usually spinel based metal oxide (such as copper chromium oxide), organic metal complexes such as palladium complexes or copper complexes, however, there are some limitations based on these additives. For organic metal complexes, usually relatively higher loadings are required to obtain sufficiently dense nucleation for rapid metallization when activated by laser radiation, which adversely affects the mechanical properties of the materials.

Thermoplastic compositions for a laser direct structuring process are known from EP2291290 A1. EP 2291290 describes a composition comprising a thermoplastic resin, a laser direct structuring (LDS) additive and a flame retardant. The LDS additive helped to increase the FR performance. The composition has a UL94 V0 rating at a thickness of 1.6 mm. To impart additional impact strength fillers are used e.g. TiO₂, boron-nitride or glass fibers, amongst many other materials.

US 2009/0292051 A1 describes laser direct structuring materials with a high dielectric constant to be used in e.g. antennas. The compositions described in US 2009/0292051 A1 comprise a thermoplastic resin, an LDS additive and a ceramic filler. As reinforcement fillers glass fibers and boron nitride are mentioned amongst others. As a ceramic filler TiO2 is used.

WO2012/056385 also describes laser direct structuring materials. The compositions comprise TiO2 and materials chosen from the group of anatise, rutile, ZnO, BaSO4 and BaTiO3. These materials exhibited a synergistic effect with the laser active table additive as well as to improve the plating performance of the LDS composition.

However, it has been recognized by the inventors that TiO2 adversely affects mechanical properties in glass fiber comprising compositions.

An object of the present invention therefor is to provide a glass fiber reinforced thermoplastic composition capable of being used in a laser direct structuring process with improved mechanical properties, with retention of good LDS properties.

According to the invention this object is reached by the features of claim 1.

The thermoplastic composition of the present invention comprises from 30 to 60 wt.% by weight of a thermoplastic base resin. Examples of thermoplastic resins that may be used in the present invention include, but are not limited to, polycarbonate or a polycarbonate/acrylonitrile-butadiene-styrene resin blend; a poly(arylene ether) resin, such as a polyphenylene oxide resin a nylon-based resin, a polyphthalamide resin, a polyphenylene oxide resin or a combination including at least one of the foregoing resins. It is noted that the wt.% as mentioned herein all are relative to the total weight of the thermoplastic composition.

In addition to the thermoplastic resin, the composition of the present invention comprises from 1.0 to 8.0 wt.% of a laser direct structuring additive. The LDS additive is selected to enable the composition to be used in a laser direct structuring process. In an LDS process, a laser beam exposes the LDS additive to place it at the surface of the thermoplastic composition and to activate metal atoms from the LDS additive. As such, the LDS additive is selected such that, upon exposure to a laser beam, metal atoms are activated and exposed and in areas not exposed by the laser beam, no metal atoms are exposed. In addition, the LDS additive is selected such that, after being exposed to laser beam, the etching area is capable of being plated to form conductive structure. As used herein "capable of being plated" refers to a material wherein a substantially uniform metal plating layer can be plated on laser-etched area and show a wide window for laser parameters. For LDS, the goal is the formation of metal seeds on the laser etched surface, and the final metallization layer during the following plating process. Plating rate and adhesion of plated layers are the key evaluation requirements.

Laser radiation activates the polymer surface for the subsequent plating process. Without being bound by a theory, it seems that during activation with the laser organic metal complexes break down to metal nuclei. These nuclei enable the material to then be plated and enable adhesion of the metallization layer in metallization process.

Examples of LDS additives useful in the present invention include, but are not limited to, a heavy metal mixture oxide spinel, such as copper chromium oxide spinel; a copper salt, such as copper hydroxide phosphate copper phosphate, copper sulfate, cuprous thiocyanate; or a combination including at least one of the foregoing LDS additives.

In one embodiment, the LDS additive is a heavy metal mixture oxide spinel, such as copper chromium. The use of the heavy metal mixture oxide spinel enables the composition to be used in a laser direct structuring. The LDS additive is present in amounts of from 1.0 to 8 wt.%. In one embodiment, the LDS additive is present in amounts of from 2.5 to 7.5 wt.%. In another embodiment, the LDS additive is present in amounts from 3.5 to 6.5 wt.%. In still another embodiment, the LDS additive is present in amounts from 4.5 to 5.5 wt.%.

As discussed, the LDS additive is selected such that, after activating with a laser, the conductive path can be formed by electroless plating process e.g. by applying a standard process. When an article comprising an LDS additive is exposed to the laser, its surface is activated. The laser draws the circuit pattern onto the part and leaves behind a roughened surface containing embedded metal particles. These particles act as nuclei for the plating process, such as a copper plating process. Other electroless plating processes that may be used include, but are not limited to, gold plating, nickel plating, silver plating, zinc plating, tin plating or the like.

The thermoplastic composition of the present invention comprises from 5 to 40 wt.%, preferably from 7.5 to 30 wt.% and more preferably from 10 to 20 wt.% of aluminum oxide, boron nitride or combinations thereof. Upon replacement of TiO₂, by aluminum oxide, boron nitride or combinations thereof, a glass fibre reinforced thermoplastic composition with improved mechanical properties and in particular tensile elongation at break en impact resistance with retention of good LDS properties is obtained. The composition according to the invention may comprise small amounts of TiO₂, for example as a pigment, but in amounts less than typically used for enhancing the LDS properties. Suitably, the composition comprises 0 - 2 wt.% of TiO2. Preferably, the amount of TiO2 is at most 1 wt.%, more preferably at most 0.5 wt.%, if present at all.

The thermoplastic composition of the present invention comprises from 5 to 25 w% of a flame retardant. Inorganic flame retardants may be used, for example sulfonate salts such as potassium perfluorobutane sulfonate (Rimar salt) and potassium diphenylsulfone sulfonate; salts formed by reacting for example an alkali metal or alkaline earth metal (preferably lithium, sodium, potassium, magnesium, calcium and barium salts) and an inorganic acid complex salt, for example, an oxo-anion, such as alkali metal and alkaline-earth metal salts of carbonic acid, such as Na2CO3, K2CO3. MgCO3, CaCO3, BaCO3, and BaCO3 or fluoro-anion complex such as Li3AlF6, BaSiF6, KBF4, K3AlF6, KAlF4, K2SiF6, and/or Na3AlF6 or the like.

The thermoplastic compositions of the present invention comprises from 5 to 30 wt.% of glass fibers. The glass fibers may be surface treated with silanes to improve adhesion and dispersion with the polymeric matrix resin. In addition, the glass fibers may be provided in the form of monofilament or multifilament fibers and may be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, aromatic polyimide fiberglass fiber or the like. Fibrous fillers may be supplied in the form of, for example, roving, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

In addition to the thermoplastic resin, the LDS additive, the flame retardant, the glass fibers, and the aluminum oxide, boron nitride or combinations thereof, the thermoplastic compositions of the present invention may include various additives ordinarily incorporated in resin compositions of this type. Mixtures of additives may be used. Such additives may be mixed at a suitable time during the mixing of the components for forming the composition. The one or more additives are included in the thermoplastic compositions to impart one or more selected characteristics to the thermoplastic compositions and any molded article made therefrom. Examples of additives that may be included in the present invention include, but are not limited to, heat stabilizers, process stabilizers, antioxidants, light stabilizers, plasticizers, antistatic agents, mold releasing agents, UV absorbers, lubricants, pigments, dyes, colorants, flow promoters, impact modifiers or a combination of one or more of the foregoing additives.

In another embodiment, the thermoplastic compositions are of particular utility in the manufacture flame retardant articles that pass the UL94 vertical burn tests, in particular the UL94 V0 standard. Flame retardance of samples made from the thermoplastic compositions of the present invention is excellent. Using this standard, the thermoplastic compositions are formed into a molded article having a given thickness. In one embodiment, a molded sample of the thermoplastic composition is capable of achieving UL94 V0 rating at a thickness of 1.6 mm. In another embodiment a molded sample of the thermoplastic composition is capable of achieving UL94 V0 rating at a thickness of 1.2 mm. In still another embodiment, a molded sample of the thermoplastic composition is capable of achieving UL94 V0 rating at a thickness of 1.0 mm. In yet another embodiment, a molded sample of the thermoplastic composition is capable of achieving UL94 V0 rating at a thickness of 0.8 mm (plus or minus 10 percent).

The thermoplastic compositions of the present invention may be formed using any known method of combining multiple components to form a thermoplastic resin. In one embodiment, the components are first blended in a highspeed mixer. Other low shear processes including but not limited to hand mixing may also accomplish this blending. The blend is then fed into the throat of a twin-screw extruder via a hopper. Alternatively, one or more of the components may be incorporated into the composition by feeding directly into the extruder at the throat and/or downstream through a sidestream. The extruder is generally operated at a temperature higher than that necessary to cause the composition to flow. The extrudate is immediately quenched in a water batch and pelletized. The pellets so prepared when cutting the extrudate may be one-fourth inch long or less as desired. Such pellets may be used for subsequent molding, shaping, or forming.

Shaped, formed, or molded articles including the thermoplastic compositions are also provided. The thermoplastic compositions can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, automotive applications, and the like.

### Examples

The compositions of Example I and Comparative Example A, shown in Table 1 were prepared by melt-blending PA-X (PA4T/66 copolymer, Tm= 320 °C, Mn around 10,000 g/mol, Mw around 20,000 g/mol) with the the constituting components on a Werner & Pfleiderer ZE-25 twin screw extruder using a 330°C flat temperature profile. The constituents were fed via a hopper, glass fibers were added via a side feed. Throughput was 20 kg/h and screw speed was 200 rpm. The settings typically resulted in a measured melt temperature between about 340 and about 350 °C. The polymer melt was degassed at the end of the extruder. The melt was extruded into strands, cooled and chopped into granules.

### Injection moulding of test bars

Dried granulate material was injection moulded in a mould to form test bars with a thickness of 4 mm conforming ISO 527 type 1A for tensile testing, ISO 179/1 eU for unnotched Charpy testing, ISO 179/1 eA for notched charpy testing and ISO 75 for HDT testing. Dried granulate material was also injection moulded in a mould to form test bars according to UL 94 test bars of 0.8 mm thick. The temperature of the melt in the injection moulding machine was 340 °C, the temperature of the mould was 120 °C. The test bars were used to measure the flame retardant properties and mechanical properties of the compositions, the results of which are shown in Table 2. All tests were carried out on test bars dry as made.

The LDS behavior was tested with a 20W laser. Plating was done with a standard Ethone Plating bath with Cu only. Plating thickness was measured with 300micron diameter X-ray beam, averaged over 9 different measurements. Results are given in Table 3. From the results it can be concluded that the replacement of TiO2 by boron nitride surprisingly improved the mechanical properties of an LDS compound with retention of good LDS properties.

**Table 1:**

| ***Samples:*** | **Comp Ex. 1** | **Example 1** |
|---|---|---|
| **Raw materials** | | |
| DA-X | 48,00 | 42,58 |
| X21 | | 10,00 |
| Chopvantage HP3660 | 10 | 15 |
| Sheppard black1g | 5 | 5 |
| SFG20 | 15 | |
| R105 (TiO2) | 10 | |
| Boron Nitride | | 15 |
| Exolite^{R} | 12 | 12 |
| Irganix^{R} 1098 | | 0,42 |

X21 is a PA6i/6T copolymer (from Novamid^{™}), Chopvantage HP3660 is chopped fiberglass from PPG Fiber Glass, Sheppard Black 1 G is the LDS component from the Shepherd Color Company, SFG20 is a mica from Aspanger Bergbau und Mineralwerke, R105 is TiO₂ from Dupont, Boron Nitride is a product from Dandong Chemical Engineering Institute Co., Ltd., Exolite^{R} is a Flame retardant from Clariant, Irganox^{R} 1098 is an antioxidant from BASF.

**Table 2.**

| ***Analysis AT Mechanical Tensile*** | **Comp. Ex. 1** | **Example I** |
|---|---|---|
| Test temperature [°C] | 23 | 23 |
| Test speed | 5 mm/min(-) | 5 mm/min(-) |
| ***Results*** | | |
| **Average Stress At Break [Mpa]** | **84,7** | **98,2** |
| SD Stress At Break [N/mm²] | 1,1 | 0,6 |
| **Average Strain At Break [%]** | **1,18** | **1,59** |
| SD Strain At Break [%] | 0,03 | 0,03 |
| **E-Modulus [MPa]** | **9819** | **10799** |
| SD E-modulus [N/mm²] | 19 | 84 |

| ***Analysis AT Flammability UL 94*** | | |
|---|---|---|
| Specimen Thickness [mm] | 0,8 | 0,8 |
| ***Results*** | | |
| **Classification** | **V0** | **V0** |

| ***Analysis AT Mechanical Charpy*** | | |
|---|---|---|
| Test temperature [°C] | 23 | 23 |
| ***Results*** | | |
| **Average Charpy [KJ/m2]** | **19,1** | **23,1** |
| SD Charpy [KJ/m2] | 0,5 | 1,7 |

| ***Charpy Notched*** | | |
|---|---|---|
| Test temperature [°C] | 23 | 23 |
| ***Results*** | | |
| **Average Charpy [KJ/m2]** | **2,17** | 3,54 |
| SD Charpy [KJ/m2] | 0,1 | 0,24 |

| ***Analysis AT Thermic HDT*** | | |
|---|---|---|
| Method | HDT A [1.80 MPa] | HDT A [1.80 Mpa] |
| ***Results*** | | |
| **Average HDT [°C]** | **276** | **273,9** |
| SD HDT [°C] | 7,9 | 3,2 |

**Table 3.**

| Samples | **% Laser power** | **Cu thickness** | **Stdev** | **Vc** |
|---|---|---|---|---|
| | | *[µm]* | *[µm]* | *[%]* |
| Exampe I | 90 | 5,8 | 0,2 | 3,4 |
| Example I | 80 | 5,2 | 0,1 | 1,7 |
| Exampe I | 70 | 2,2 | 0,2 | 7,5 |
| Example I | 60 | 0,4 | 0,1 | 24,2 |
| Comp. Ex 1 | 90 | 5,9 | 0,3 | 5,8 |
| Comp. Ex 1 | 80 | 5,4 | 0,1 | 2,5 |
| Comp. Ex 1 | 70 | 3,3 | 0,2 | 4,7 |
| Comp. Ex. 1 | 60 | 1,1 | 0,1 | 11,9 |

## Claims

1. A thermoplastic composition capable of being plated after being activated using a laser, comprising:
a) from 30 to 60 wt.% of a thermoplastic base resin;
b) from 1.0 to 8.0 wt.% of a laser direct structuring additive;
c) from 5 to 40 wt.% of aluminum oxide, or of boron nitride, or of a combination thereof,
d) from 5 to 25 w% of a flame retardant,
e) from 5 to 30 wt.% of glass fibers, and
f) 0 - 2 wt.% of titanium dioxide, the wt.% are relative to the total weight of the thermoplastic composition.

## Patentansprüche

1. Thermoplastische Zusammensetzung, die nach Aktivierung mit einem Laser mit einem Metall beschichtbar ist, umfassend:
a) 30 bis 60 Gew.-% eines thermoplastischen Grundharzes;
b) 1,0 bis 8,0 Gew.-% eines Laserdirektstrukturierungsadditivs;
c) 5 bis 40 Gew.-% Aluminiumoxid oder Bornitrid oder einer Kombination davon;
d) 5 bis 25 Gew.-% eines Flammschutzmittels,
e) 5 bis 30 Gew.-% Glasfasern und
f) 0-2 Gew.-% Titandioxid, wobei sich die Gew.-%-Angaben auf das Gesamtgewicht der thermoplastischen Zusammensetzung beziehen.

## Revendications

1. Composition thermoplastique capable d'être plaquée après avoir été activée en utilisant un laser, comprenant :
a) de 30 à 60 % en poids d'une résine de base thermoplastique ;
b) de 1,0 à 8,0 % en poids d'un additif de structuration directe par laser ;
c) de 5 à 40 % en poids d'oxyde d'aluminium, ou de nitrure de bore, ou d'une combinaison de ceux-ci,
d) de 5 à 25 % en poids d'un agent ignifugeant,
e) de 5 à 30 % en poids de fibres de verre, et
f) de 0 à 2 % en poids de dioxyde de titane, les pourcentages en poids étant exprimés relativement au poids total de la composition thermoplastique.
